# EUROPEAN PATENT APPLICATION

(11) **EP 4 841 423 A1**
(43) Date of publication of application: **18.11.2026**
(21) Application number: 26176467.4
(22) Date of filing: 05.05.2026
(51) Int. Cl.: G06F 3/12

(54) **PRINTING MANAGEMENT APPARATUS, PRINTING MANAGEMENT PROGRAM, AND IMAGE FORMING APPARATUS**

(30) Priority: 16.05.2025 JP 2025082807
(71) Applicant: KYOCERA Document Solutions Inc., Osaka-shi, Osaka 540-8585 (JP)
(72) Inventor: HIGASHI, Mikio, Osaka-shi, Osaka, 540-8585 (JP); FUJIKAWA, Takuma, Osaka-shi, Osaka, 540-8585 (JP)
(74) Representative: Herrero & Asociados, S.L.

(57) **Abstract**

A printing management apparatus (20) includes a printing management device (25a). The printing management device (25a) is configured to manage, when data is received, a print job based on data in association with a job code for execution of the print job, an expiration date of the job code, and a transmission source of the data, transmit, when the job code is received from an image forming apparatus (30), information on a target job as the print job corresponding to the received job code and information on a related job as the print job different from the target job and as the print job with which the transmission source associated with the target job is associated and which corresponds to the job code with the expiration date not expired, to the image forming apparatus (30), and transmit, when a file (24c) of the print job is requested from the image forming apparatus (30), the requested file (23c) to the image forming apparatus (30).

## Description

### BACKGROUND

The present invention relates to a printing management apparatus, a printing management program, and an image forming apparatus.

As a printing management apparatus, a printing management apparatus that transmits, in a case where a job code for execution of a print job is received from an image forming apparatus, information on a target job as a print job corresponding to the received job code and information on a related job as a print job with which a transmission source associated with the target job is associated, to the image forming apparatus is known.

### SUMMARY

As one aspect of the present invention, a technique improved over the above-described technique is proposed.

A printing management apparatus according to one aspect of the present invention includes a printing management device. The printing management device configured to manage a print job. The printing management device is configured to manage, in a case where data is received, the print job based on the data in association with a job code for execution of the print job, an expiration date of the job code, and a transmission source of the data, transmit, in a case where the job code is received from the image forming apparatus, information on a target job as the print job corresponding to the received job code and information on a related job as the print job different from that target job and as the print job with which the transmission source associated with the target job is associated and which corresponds to the job code with the expiration date not expired, to the image forming apparatus, and transmit, in a case where a file of the print job is requested from the image forming apparatus, the requested file to the image forming apparatus.

A printing management program according to one aspect of the present invention causes a computer to operate as a printing management device configured to manage a print job, and further operates the computer such that the printing management device manages, in a case where data is received, the print job based on the data in association with a job code for execution of the print job, an expiration date of the job code, and a transmission source of the data, transmits, in a case where the job code is received from the image forming apparatus, information on a target job as the print job corresponding to the received job code and information on a related job as the print job different from that target job and as the print job with which the transmission source associated with the target job is associated and which corresponds to the job code with the expiration date not expired, to the image forming apparatus, and transmits, in a case where a file of the print job is requested from the image forming apparatus (30), the requested file to the image forming apparatus (30).

An image forming apparatus according to one aspect of the present invention includes a printing execution device . The printing execution device is configured to execute a print job based on received data that is managed by a printing management apparatus configured to manage the print job in association with a job code for execution of the print job, an expiration date of the job code, and a transmission source of the data. The printing execution device is configured to display, in a case where the job code is transmitted to the printing management apparatus, when information on a target job as the print job corresponding to the transmitted job code and information on a related job as the print job different from the target job and as the print job with which the transmission source associated with the target job is associated and which corresponds to the job code with the expiration date not expired are received from the printing management apparatus, a screen showing the received information on the target job and information on the related job, display, in a case where the expiration date of the job code of the print job is included in at least one of the information on the target job and the information on the related job received from the printing management apparatus, the expiration date on the screen, and execute, in a case where a file of the print job is requested to the printing management apparatus, when the requested file is received from the printing management apparatus, printing based on the received file.

### BRIEF DESCRIPTION OF THE DRAWINGS

FIG. 1 is a block diagram of an example of a system according to an embodiment of the present invention.
FIG. 2 is a block diagram of an example of a printing management apparatus shown in FIG. 1 in the case of being configured with one computer.
FIG. 3 is a diagram showing an example of job management information shown in FIG. 2.
FIG. 4 is a block diagram of an example of an image forming apparatus shown in FIG. 1 in the case of being configured with an MFP.
FIG. 5 is a block diagram of an example of a user terminal shown in FIG. 1 in the case of being configured with a PC.
FIG. 6 is a sequence diagram of an operation of the system shown in FIG. 1 when a print job is registered in the printing management apparatus in a case where an electronic mail is transmitted to an electronic mail address for a printing management apparatus by the user terminal.
FIG. 7 is a flowchart of an operation of the printing management apparatus shown in FIG. 2 in the case of registering a print job.
FIG. 8 is a sequence diagram of an operation of the system shown in FIG. 1 in a case where a print job registered in the printing management apparatus is executed by the image forming apparatus.
FIG. 9 is a diagram showing an example of a job code input screen that is displayed in the operation shown in FIG. 8.
FIG. 10 is a flowchart of an operation of the printing management apparatus shown in FIG. 2 in a case where a job information request is received from the image forming apparatus.
FIG. 11 is a diagram showing an example of a job list screen that is displayed in the operation shown in FIG. 10.
FIG. 12 is a flowchart of an operation of the printing management apparatus shown in FIG. 2 in the case of executing processing regarding a code expiration date.
FIG. 13 is a sequence diagram of an operation of the system shown in FIG. 1 in a case where an access to an expiration date update page is instructed to the user terminal.
FIG. 14 is a flowchart of an operation of the printing management apparatus shown in FIG. 2 in the case of deleting a code from the job management information.

### DETAILED DESCRIPTION

Hereinafter, an embodiment of the present invention will be described with reference to the drawings.

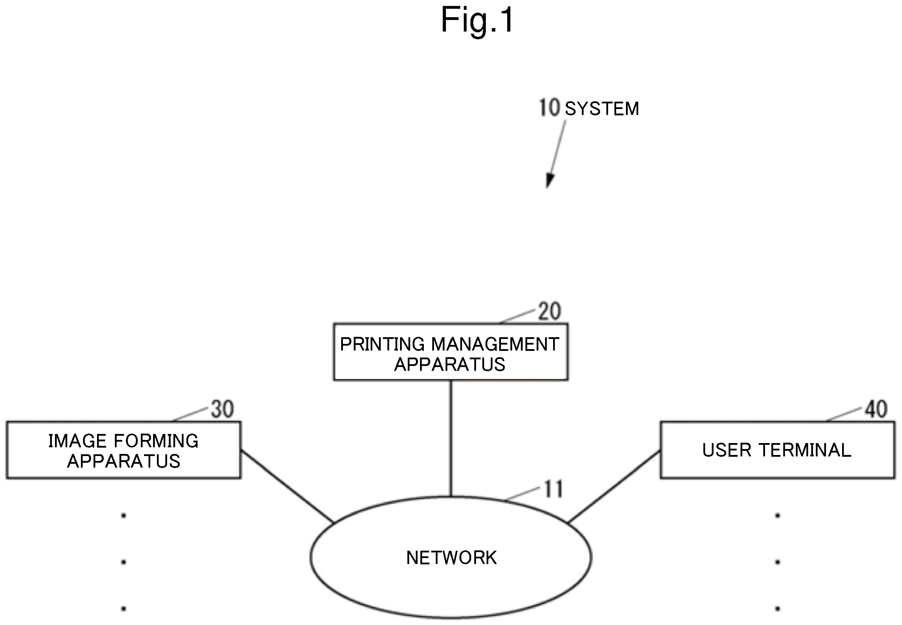

First, a configuration of a system according to the embodiment of the present invention will be described. FIG. 1 is a block diagram of an example of a system 10 according to the present embodiment.

As shown in FIG. 1, the system 10 includes a printing management apparatus 20 that manages a print job. The printing management apparatus 20 may be configured with one computer such as a personal computer (PC) or may be configured with a plurality of computers. The printing management apparatus 20 may be configured on a cloud.

The system 10 includes an image forming apparatus 30 that executes a print job. The system 10 may include an image forming apparatus that executes a print job and has a similar configuration to the image forming apparatus 30, other than the image forming apparatus 30. The image forming apparatus may be configured with, for example, a printer-only machine or may be configured with a multifunction peripheral (MFP).

The system 10 includes a user terminal 40 that is used by a user. The system 10 may include a user terminal that is used by the user and has a similar configuration to the user terminal 40, other than the user terminal 40. The user terminal may be configured with, for example, a PC, a tablet, or a smartphone.

The printing management apparatus 20 and the image forming apparatus in the system 10 can perform communication with each other via a network 11 such as the Internet. The user terminal in the system 10 can be connected to the network 11.

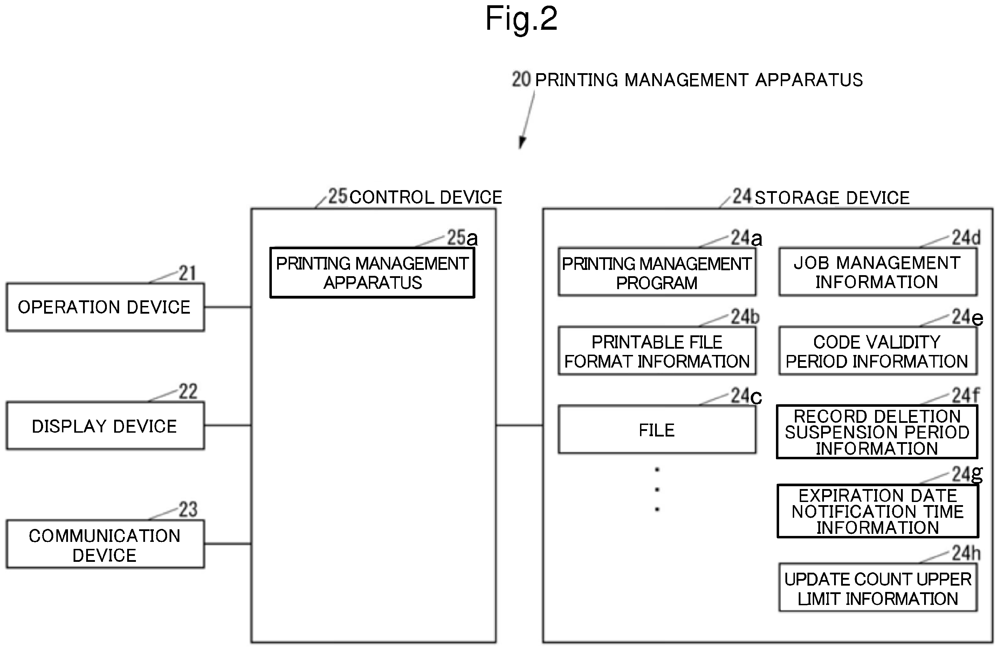

FIG. 2 is a block diagram of an example of the printing management apparatus 20 in the case of being configured with one computer.

As shown in FIG. 2, the printing management apparatus 20 includes an operation device 21 that is, for example, an operation device to which various operations are input, such as a keyboard and a mouse, a display device 22 that is, for example, a display device configured to display various kinds of information such as a liquid crystal display (LCD), a communication device 23 that is a communication device configured to perform communication with an external apparatus via a network such as a local area network (LAN) or the Internet or directly in a wired or wireless manner not via a network, a storage device 24 that is, for example, a nonvolatile storage device configured to store various kinds of information such as a semiconductor memory or a hard disk drive (HDD), and a control device 25 that controls the entire printing management apparatus 20.

The storage device 24 stores a printing management program 24a for managing a print job. The printing management program 24a may be installed on the printing management apparatus 20 in a manufacturing step of the printing management apparatus 20, may be additionally installed on the printing management apparatus 20 from an external storage medium such as a universal serial bus (USB) memory, or may be additionally installed on the printing management apparatus 20 from a network, for example.

The storage device 24 stores printable file format information 24b indicating a file format printable by the image forming apparatus. In the printable file format information 24b, for example, a printable file format such as a portable document format (PDF) file format is shown. The file format shown in the printable file format information 24b can be set by a manager via the operation device 21 or the communication device 23, for example.

The storage device 24 stores a plurality of files that are to be printed by the image forming apparatus. For example, the storage device 24 stores a file 24c.

The storage device 24 stores job management information 24d that manages a print job.

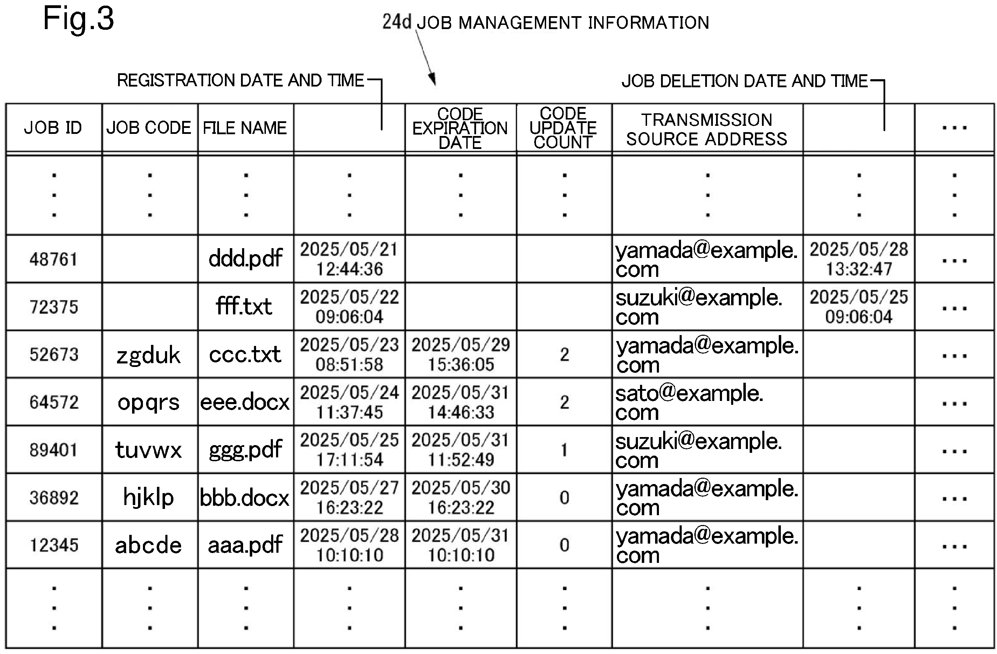

FIG. 3 is a diagram showing an example of the job management information 24d.

As shown in FIG. 3, the job management information 24d includes a job ID as identification information of a print job, a job code as a code for execution of a print job, a file name of a file for a print job, a registration date and time of a print job in the printing management apparatus 20, a code expiration date as an expiration date of a job code, a code update count as an update count of a job code, a transmission source address of an electronic mail to be a source of a file for a print job, and a job deletion date and time as a deletion date and time of a print job, for each print job. In the job management information 24d shown in FIG. 3, some pieces of information are omitted.

The job code is given to each print job such that the same job code is not given to different print jobs in the job management information 24d.

As shown in FIG. 2, the storage device 24 stores code validity period information 24e indicating a validity period of a job code. The validity period shown in the code validity period information 24e may be, for example, three days. The validity period shown in the code validity period information 24e can be set by the manager via the operation device 21 or the communication device 23, for example.

The storage device 24 stores record deletion suspension period information 24f indicating a period (hereinafter, referred to as a "record deletion suspension period") during which deletion of a record is suspended in the job management information 24d. The record deletion suspension period shown in the record deletion suspension period information 24f may be, for example, three days. The record deletion suspension period shown in the record deletion suspension period information 24f can be set by the manager via the operation device 21 or the communication device 23, for example.

The storage device 24 stores expiration date notification time information 24g indicating a time at which an electronic mail (hereinafter, referred to as an "expiration date notification mail") for notifying of a code expiration date is transmitted, by a period. The period shown in the expiration date notification time information 24g is a period equal to or less than the validity period shown in the code validity period information 24e and may be, for example, one day. The period shown in the expiration date notification time information 24g can be set by the manager via the operation device 21 or the communication device 23, for example.

The storage device 24 stores update count upper limit information 24h indicating an upper limit of a code update count. The upper limit shown in the update count upper limit information 24h may be, for example, two times. The upper limit shown in the update count upper limit information 24h can be set by the manager via the operation device 21 or the communication device 23, for example.

The control device 25 (first control device) includes, for example, a central processing unit (CPU) as an example of a processor, a read only memory (ROM) that stores programs and various kinds of data, and a random access memory (RAM) as a memory that is used as a work area of the CPU of the control device 25. The CPU of the control device 25 executes a program stored in the storage device 24 or the ROM of the control device 25. The above-described processor is an example of a computer.

The control device 25 functions as a printing management device 25a that manages a print job, upon execution of the printing management program 24a by the above-described CPU.

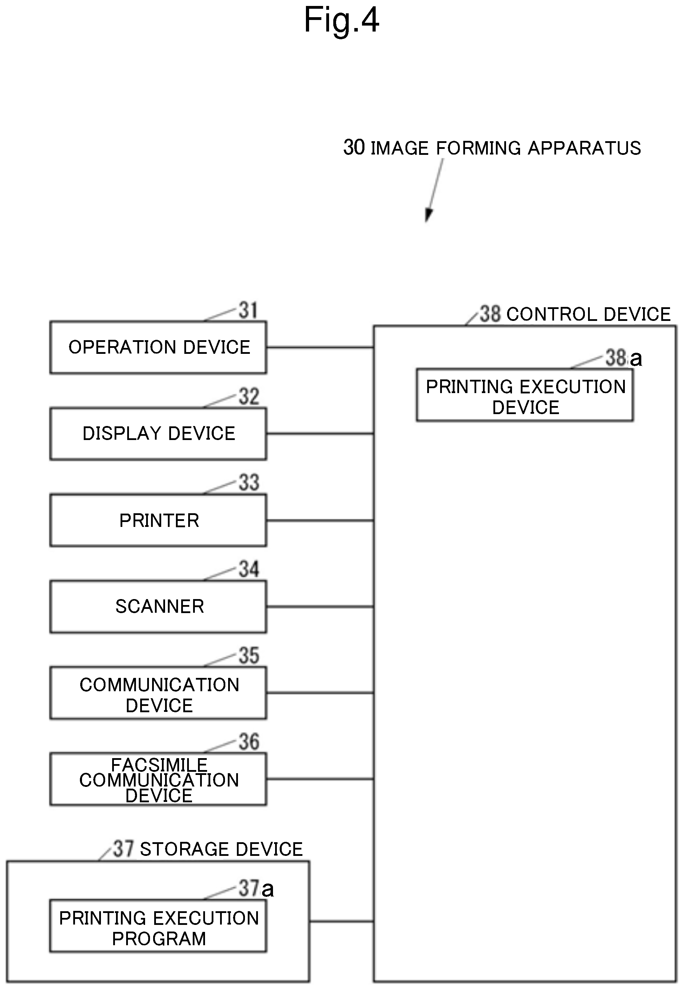

FIG. 4 is a block diagram of an example of the image forming apparatus 30 in the case of being configured with an MFP.

As shown in FIG. 4, the image forming apparatus 30 includes an operation device 31 that is, for example, an operation device to which various operations are input, such as buttons, a display device 32 that is, for example, a display device configured to display various kinds of information such as an LCD, a printer 33 that is a printing device configured to print an image on a recording medium such as a sheet, a scanner 34 that is a reading device configured to read an image from a document, a communication device 35 that is a communication device configured to perform communication with an external apparatus via a network such as a LAN or the Internet or directly in a wired or wireless manner not via a network, a facsimile communication device 36 that is a facsimile device configured to perform facsimile communication with an external facsimile apparatus (not shown) via a communication line such as a public telephone line, a storage device 37 that is, for example, a nonvolatile storage device configured to store various kinds of information such as a semiconductor memory or a hard disk drive (HDD), and a control device 38 that controls the entire image forming apparatus 30.

The storage device 37 stores a printing execution program 37a for executing a print job. The printing execution program 37a may be installed on the image forming apparatus 30 in a manufacturing step of the image forming apparatus 30, may be additionally installed on the image forming apparatus 30 from an external storage medium such as a USB memory, or may be additionally installed on the image forming apparatus 30 from a network, for example.

The control device 38 (second control device) includes, for example, a central processing unit (CPU) as an example of a processor, a read only memory (ROM) that stores programs and various kinds of data, and a random access memory (RAM) as a memory that is used as a work area of the CPU of the control device 38. The CPU of the control device 38 executes a program stored in the storage device 37 or the ROM of the control device 38. The above-described processor is an example of a processor.

The control device 38 functions as a printing execution device 38a that executes a print job, upon execution of the printing execution program 37a by the above-described CPU.

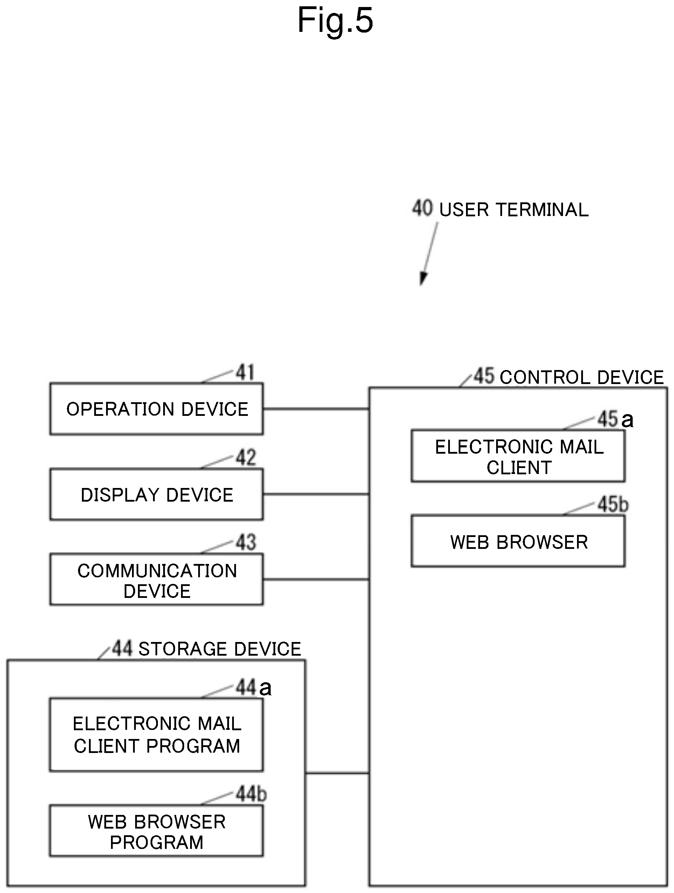

FIG. 5 is a block diagram of an example of the user terminal 40 in the case of being configured with a PC.

As shown in FIG. 5, the user terminal 40 includes an operation device 41 that is, for example, an operation device to which various operations are input, such as a keyboard and a mouse, a display device 42 that is, for example, a display device configured to display various kinds of information such as an LCD, a communication device 43 that is a communication device configured to perform communication with an external apparatus via a network such as a LAN or the Internet or directly in a wired or wireless manner not via a network, a storage device 44 that is, for example, a nonvolatile storage device configured to store various kinds of information such as a semiconductor memory or an HDD, and a control device 45 that controls the entire user terminal 40.

The storage device 44 stores a program (hereinafter, referred to as an "electronic mail client program") 44a for an electronic mail client. The electronic mail client program 44a may be installed on the user terminal 40 in a manufacturing step of the user terminal 40, may be additionally installed on the user terminal 40 from an external storage medium such as a USB memory, or may be additionally installed on the user terminal 40 from a network, for example.

The storage device 44 stores a program (hereinafter, referred to as a "web browser program") 44b for a web browser. The web browser program 44b may be installed on the user terminal 40 in a manufacturing step of the user terminal 40, may be additionally installed on the user terminal 40 from an external storage medium such as a USB memory, or may be additionally installed on the user terminal 40 from a network, for example.

The control device 45 includes, for example, a CPU as an example of a processor, a ROM that stores programs and various kinds of data, and a RAM as a memory that is used as a work area of the CPU of the control device 45. The CPU of the control device 45 executes a program stored in the storage device 44 or the ROM of the control device 45. The above-described processor is an example of a computer.

The control device 45 functions as an electronic mail client 45a upon execution of the electronic mail client program 44a by the above-described CPU.

The control device 45 functions as a web browser 45b upon execution of the web browser program 44b by the above-described CPU.

Next, an operation of the system 10 will be described.

First, an operation of the system 10 when a print job is registered in the printing management apparatus 20 in a case where an electronic mail is transmitted to an electronic mail address for the printing management apparatus 20 by a user terminal will be described.

Hereinafter, as the operation of the system 10 when a print job is registered in the printing management apparatus 20 in a case where an electronic mail is transmitted to an electronic mail address for the printing management apparatus 20 by the user terminal, an operation of the system 10 when a print job is registered in the printing management apparatus 20 in a case where an electronic mail is transmitted to an electronic mail address for the printing management apparatus 20 by the user terminal 40 will be described as an example.

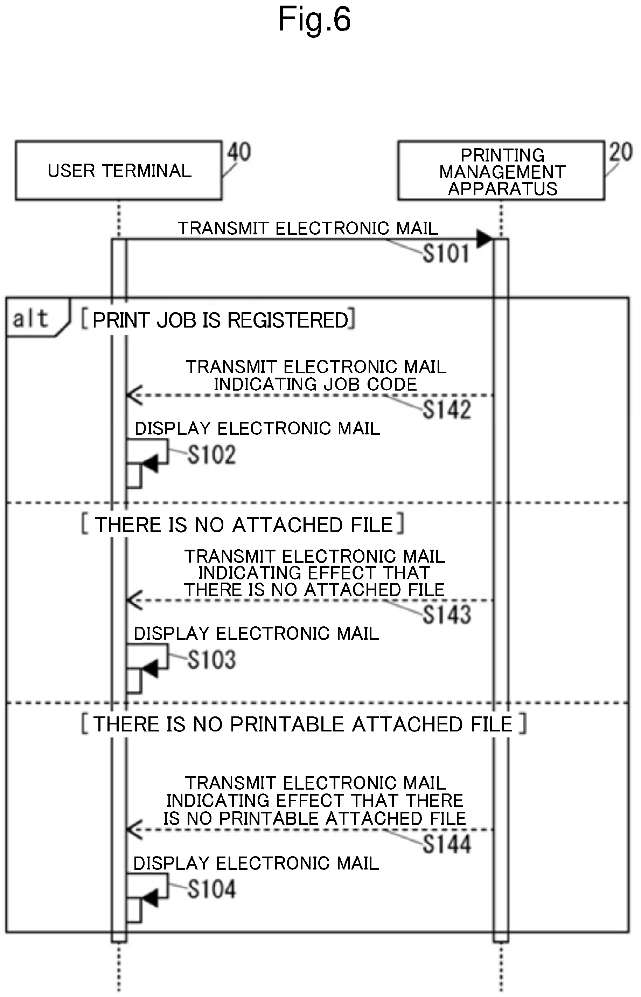

FIG. 6 is a sequence diagram of an operation of the system 10 when a print job is registered in the printing management apparatus 20 when an electronic mail is transmitted to an electronic mail address for the printing management apparatus 20 by the user terminal 40.

The user can instruct the user terminal 40 to transmit an electronic mail to the electronic mail address for the printing management apparatus 20 via the operation device 41 of the user terminal 40. In the case of instructing the user terminal 40 to transmit an electronic mail to the electronic mail address for the printing management apparatus 20, the user may attach a file to be printed by the image forming apparatus to the electronic mail. Further, in the case of instructing the user terminal 40 to transmit an electronic mail to the electronic mail address for the printing management apparatus 20, the user may include one of a character string indicating that a printing target is the body of the electronic mail and a character string indicating that a printing target is an attached file of the electronic mail, in at least one of the subject and the body of the electronic mail. When the transmission of the electronic mail to the electronic mail address for the printing management apparatus 20 is instructed, as shown in FIG. 6, the electronic mail client 45a of the user terminal 40 transmits the electronic mail to the electronic mail address for the printing management apparatus 20 (S101).

The electronic mail transmitted from the user terminal 40 to the electronic mail address for the printing management apparatus 20 is received by the printing management apparatus 20 via a plurality of electronic apparatuses such as an electronic mail server (not shown). It should be noted that, in FIG. 6, a detailed communication path from the user terminal 40 to the printing management apparatus 20 is omitted.

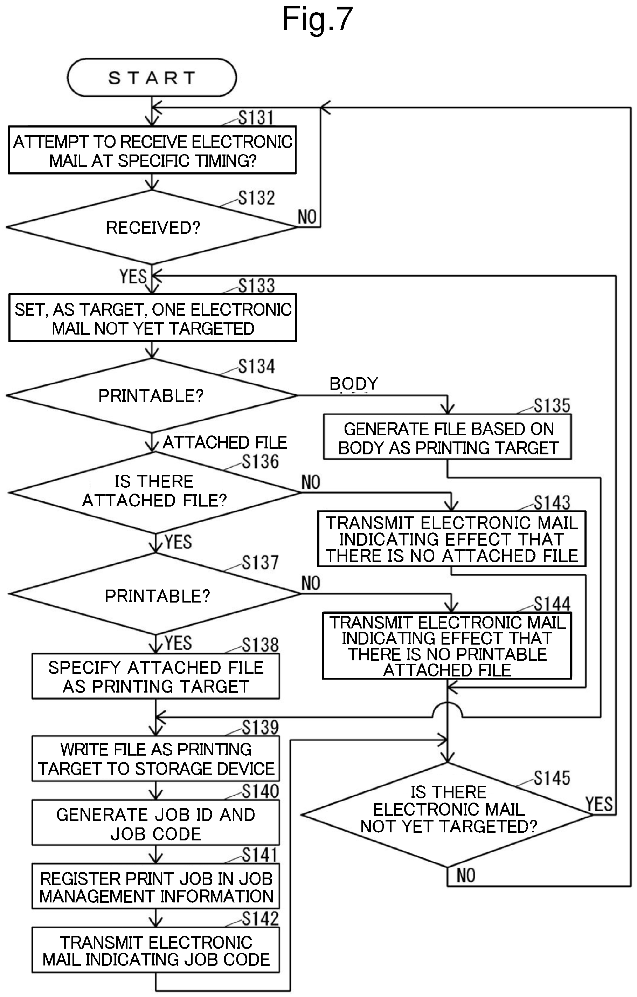

FIG. 7 is a flowchart of an operation of the printing management apparatus 20 in the case of registering a print job.

As shown in FIG. 7, the printing management device 25a of the printing management apparatus 20 attempts to receive the electronic mail to the electronic mail address for the printing management apparatus 20 at a specific timing, such as a regular timing (S131).

When the processing of S131 ends, the printing management device 25a determines whether the electronic mail to the electronic mail address for the printing management apparatus 20 is newly received (S132).

When determination is made in S132 that the electronic mail to the electronic mail address for the printing management apparatus 20 is not newly received, the printing management device 25a executes the processing of S131.

When determination is made in S132 that the electronic mail to the electronic mail address for the printing management apparatus 20 is newly received, the printing management device 25a sets, as a target, only one electronic mail not yet targeted among electronic mails determined in previous S132 to be newly received (S133).

When the processing of S133 ends, the printing management device 25a determines whether a printing target of the electronic mail as a current target is the body or the attached file of the electronic mail (S134). As a method of determination in S134, various methods can be employed. For example, in a case where the character string indicating that the printing target is the body of the electronic mail is included in at least one of the subject and the body of the electronic mail as the current target, the printing management device 25a may determine that the printing target of the electronic mail as the current target is the body of the electronic mail. Further, in a case where the character string indicating the printing target is the attached file of the electronic mail is included in at least one of the subject and the body of the electronic mail as the current target, the printing management device 25a may determine that the printing target of the electronic mail as the current target is the attached file of the electronic mail. In addition, in a case where both of the character string indicating that the printing target is the body of the electronic mail and the character string indicating that the printing target is the attached file of the electronic mail are not included in both the subject and the body of the electronic mail as the current target, the printing management device 25a may determine that the printing target of the electronic mail as the current target is a specific one of the body and the attached file of the electronic mail.

When determination is made in S134 that the printing target of the electronic mail as the current target is the body of the electronic mail, the printing management device 25a generates a file based on the body of the electronic mail as the current target as a printing target of the electronic mail as the current target (S135).

When determination is made in S134 that the printing target of the electronic mail as the current target is the attached file of the electronic mail, the printing management device 25a determines whether there is an attached file in the electronic mail as the current target (S136).

When determination is made in S136 that there is the attached file in the electronic mail as the current target, the printing management device 25a determines whether the attached file of the electronic mail as the current target is printable, on the basis of the printable file format information 24b (S137). Specifically, in a case where the file format of the attached file of the electronic mail as the current target is included in the printable file format information 24b, the printing management device 25a determines that the attached file of the electronic mail as the current target is printable. On the other hand, in a case where the file format of the attached file of the electronic mail as the current target is not included in the printable file format information 24b, the printing management device 25a determines that the attached file of the electronic mail as the current target is not printable.

When determination is made in S137 that the attached file of the electronic mail as the current target is printable, the printing management device 25a specifies the attached file of the electronic mail as the current target as the printing target of the electronic mail as the current target (S138).

When the processing of S135 or S138 ends, the printing management device 25a writes the file as the printing target of the electronic mail as the current target to the storage device 24 (S139).

When the processing of S139 ends, the printing management device 25a generates a job ID and a job code of a print job of the file written in S139 (S140).

When the processing of S140 ends, the printing management device 25a registers the print job of the file as the printing target of the electronic mail as the current target in the job management information 24d (S141). Specifically, the printing management device 25a registers a record including the job ID and the job code generated in S140, a file name of the file written to the storage device 24 in S139, and a transmission source address of the electronic mail as the current target in the job management information 24d. The printing management device 25a includes a reception date and time of the electronic mail as the current target as a registration date and time in the record to be registered in S141. The printing management device 25a includes a date and time obtained by adding the validity period shown in the code validity period information 24e to the registration date and time as a code expiration date in the record to be registered in S141. The printing management device 25a includes 0 as the code update count in the record to be registered in S141. The printing management device 25a does not include a job deletion date and time in the record to be registered in S141.

When the processing of S141 ends, the printing management device 25a transmits an electronic mail showing the job code generated in S140 to the transmission source address of the electronic mail as the current target (S142). The printing management device 25a may include the code expiration date registered in the job management information 24d in S141 in the electronic mail to be transmitted in S142.

When determination is made in S136 that there is no attached file of the electronic mail as the current target, the printing management device 25a transmits an electronic mail indicating the effect that there is no attached file, to the transmission source address of the electronic mail as the current target (S143).

When determination is made in S137 that the attached file of the electronic mail as the current target is not printable, the printing management device 25a transmits an electronic mail indicating the effect that there is no printable attached file, to the transmission source address of the electronic mail as the current target (S144).

When the processing of S142, S143, or S144 ends, the printing management device 25a determines whether there is an electronic mail not yet targeted among the electronic mails determined in previous S132 to be newly received (S145).

When determination is made in S145 that there is an electronic mail not yet targeted among the electronic mails determined in previous S132 to be newly received, the printing management device 25a executes the processing of S133.

When determination is made in S145 that there is no electronic mail not yet targeted among the electronic mails determined in previous S132 to be newly received, the printing management device 25a executes the processing of S131.

As shown in FIG. 6, in a case where the electronic mail transmitted from the user terminal 40 in S101 is received, when the print job based on the electronic mail is registered in S141 (see FIG. 7), the printing management device 25a of the printing management apparatus 20 transmits the electronic mail showing the job code generated in S140 (see FIG. 7) to the transmission source address of the electronic mail (S142).

The electronic mail transmitted from the printing management apparatus 20 may be received by an electronic mail client other than the electronic mail client 45a of the user terminal 40. However, in the following description, an example where the electronic mail transmitted from the printing management apparatus 20 is received by the electronic mail client 45a of the user terminal 40 will be described.

The electronic mail transmitted from the printing management apparatus 20 is received by the electronic mail client 45a of the user terminal 40 via a plurality of electronic apparatuses such as an electronic mail server (not shown). In should be noted that, in FIG. 6, a detailed communication path from the printing management apparatus 20 to the user terminal 40 is omitted.

When the electronic mail transmitted from the printing management apparatus 20 in S142 is received, the electronic mail client 45a of the user terminal 40 displays the electronic mail on the display device 42 of the user terminal 40 (S102). Accordingly, the user can confirm the job code shown in the electronic mail.

In a case where the electronic mail transmitted from the user terminal 40 in S101 is received, when determination is made in S136 (see FIG. 7) that there is no attached file in the electronic mail, the printing management device 25a of the printing management apparatus 20 transmits the electronic mail indicating the effect that there is no attached file, to the transmission source address of the electronic mail (S143).

When the electronic mail transmitted from the printing management apparatus 20 in S143 is received, the electronic mail client 45a of the user terminal 40 displays the electronic mail on the display device 42 of the user terminal 40 (S103).

In a case where the electronic mail transmitted from the user terminal 40 in S101 is received, when determination is made in S136 (see FIG. 7) that the attached file of the electronic mail is not printable, the printing management device 25a of the printing management apparatus 20 transmits the electronic mail indicating the effect that there is no printable attached file, to the transmission source address of the electronic mail (S144).

When the electronic mail transmitted from the printing management apparatus 20 in S144 is received, the electronic mail client 45a of the user terminal 40 displays the electronic mail on the display device 42 of the user terminal 40 (S104).

Next, an operation of the system 10 in a case where a print job registered in the printing management apparatus 20 is executed by an image forming apparatus will be described.

Hereinafter, as the operation of the system 10 in a case where a print job registered in the printing management apparatus 20 is executed by the image forming apparatus, an operation of the system 10 in a case where a print job registered in the printing management apparatus 20 is executed by the image forming apparatus 30 will be described as an example.

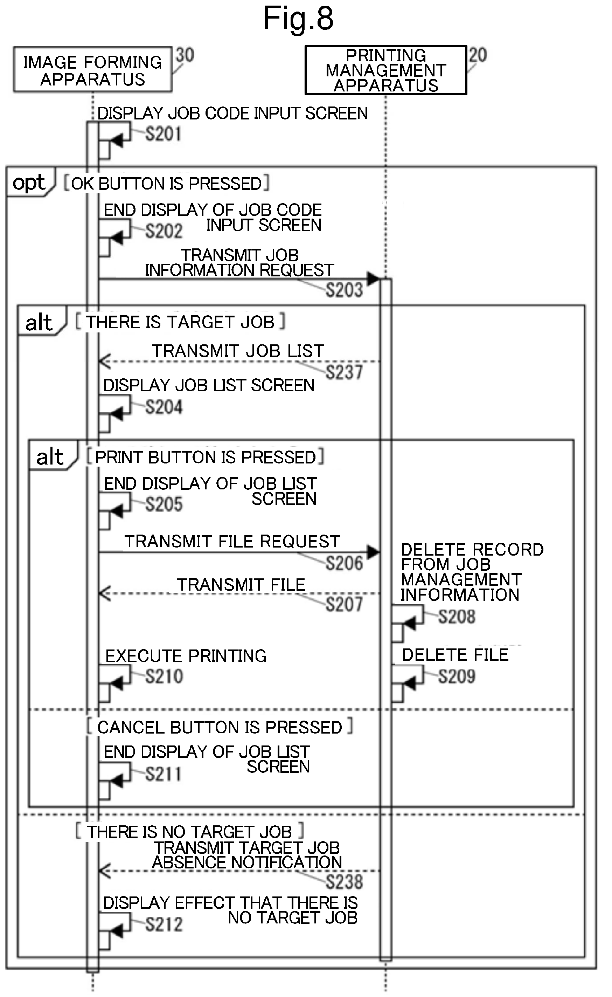

FIG. 8 is a sequence diagram of an operation of the system 10 in a case where a print job registered in the printing management apparatus 20 is executed by the image forming apparatus 30.

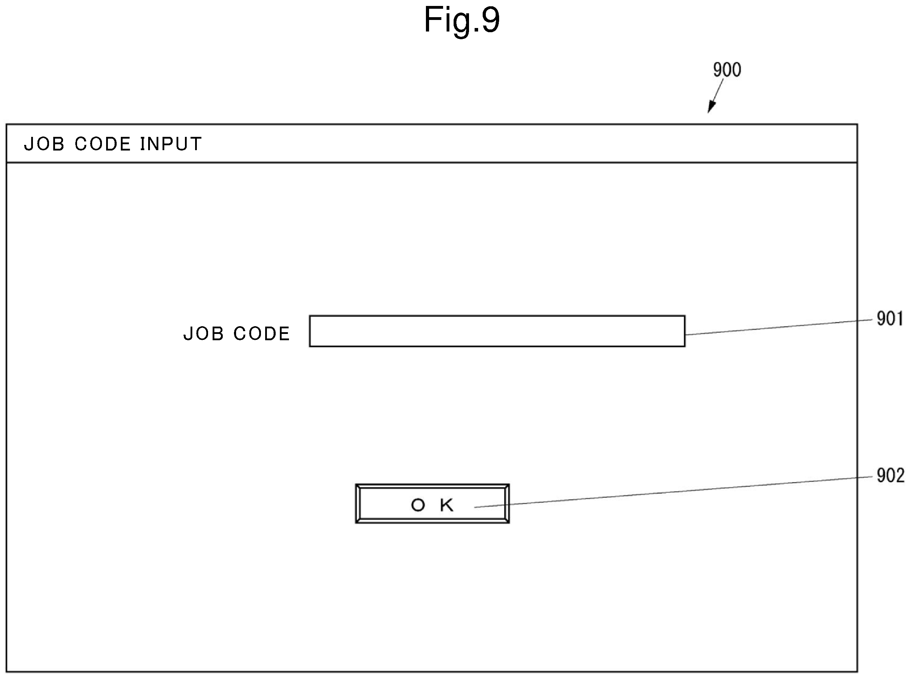

The user can instruct the image forming apparatus 30 to display a list of print jobs registered in the printing management apparatus 20 via the operation device 31 of the image forming apparatus 30. When the display of the list of the print jobs registered in the printing management apparatus 20 is instructed, as shown in FIG. 8, the printing execution device 38a of the image forming apparatus 30 displays a screen (hereinafter, referred to as a "job code input screen") 900 (see FIG. 9) for causing the user to input a job code on the display device 32 (S201).

FIG. 9 is a diagram showing an example of the job code input screen 900 that is displayed in the operation shown in FIG. 8.

The job code input screen 900 shown in FIG. 9 includes a text box 901 as an object to which a job code is input, and an OK button 902 as an object for deciding the job code input to the text box 901.

The user can input a job code notified by the electronic mail from the printing management apparatus 20 to the text box 901.

As shown in FIG. 8, after the processing of S201 ends, when determination is made that the OK button 902 is pressed, the printing execution device 38a of the image forming apparatus 30 ends the display of the job code input screen 900 on the display device 32 (S202).

When the processing of S202 ends, the printing execution device 38a transmits a request (hereinafter, referred to as a "job information request") for acquiring information on the print job to the printing management apparatus 20 (S203). The printing execution device 38a includes the job code input to the text box 901 at a time when the OK button 902 is pressed on the job code input screen 900, in the job information request.

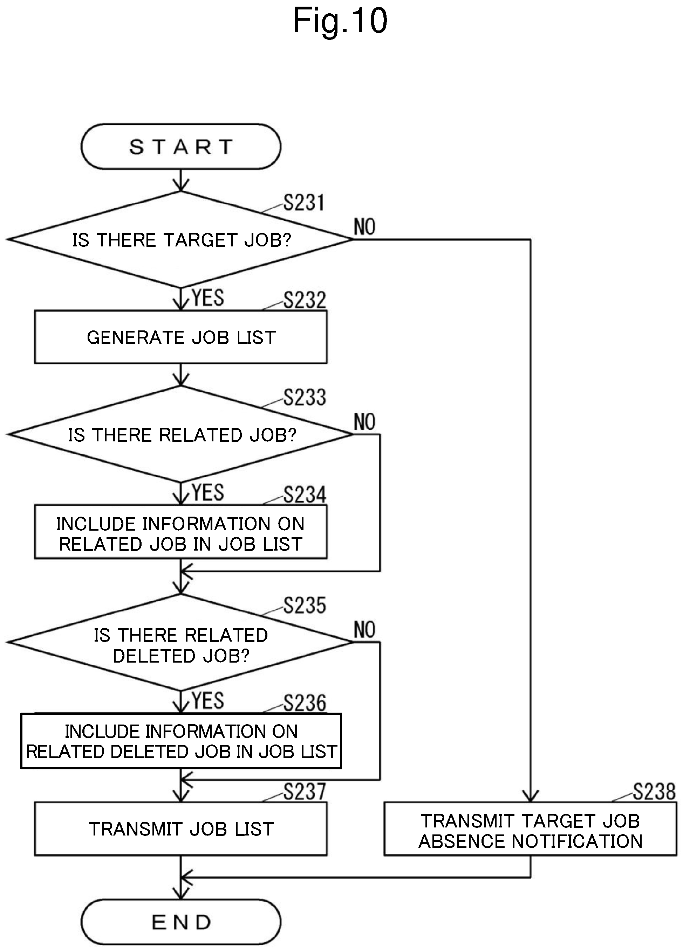

FIG. 10 is a flowchart of an operation of the printing management apparatus 20 in a case where a job information request is received from the image forming apparatus 30.

When the job information request (hereinafter, referred to as a "target request" in the description of the operation shown in FIG. 10) is received, the printing management device 25a of the printing management apparatus 20 executes the operation shown in FIG. 10.

As shown in FIG. 10, the printing management device 25a determines whether there is a print job (hereinafter, referred to as a "target job") in the job management information 24d with which the job code (hereinafter, referred to as a "target code" in the description of the operation shown in FIG. 10) included in the target request is associated (S231).

When determination is made in S231 that there is the target job, the printing management device 25a generates a list (hereinafter, referred to as a "job list") including information on the target job (S232). The printing management device 25a includes a job ID, a job ID, a file name, a registration date and time, and a code expiration date of the target job in the job management information 24d as information on the target job in the job list.

When the processing of S232 ends, the printing management device 25a determines whether there is a print job (hereinafter, referred to as a "related job" in the description of the operation shown in FIG. 10) with which the same transmission source address as the transmission source address in the job management information 24d associated with the target code is associated in the job management information 24d and which corresponds to a job code with the code expiration date not expired (specifically, with which a job code different from the target code shown in FIG. 3 is associated in the job management information 24d) (S233).

When determination is made in S233 that there is the related job, the printing management device 25a includes a job ID, a file name, a registration date and time, and a code expiration date of the related job in the job management information 24d as information on the related job in the job list for each related job (S234).

When determination is made in S233 that there is no related job or when the processing of S234 ends, the printing management device 25a determines whether there is a print job (hereinafter, referred to as a "related deleted job" in the description of the operation shown in FIG. 10) in the job management information 24d with which the same transmission source address as the transmission source address in the job management information 24d associated with the target code is associated and which corresponds to a job code with the code expiration date expired (specifically, with which a job code is not associated in the job management information 24d shown in FIG. 3) (S235).

When determination is made in S235 that there is the related deleted job, the printing management device 25a includes a file name, a registration date and time, and a job deletion date and time of the related deleted job in the job management information 24d as information on the related deleted job in the job list for each related deleted job (S236).

When determination is made in S235 that there is no related deleted job or when the processing of S236 ends, the printing management device 25a transmits the job list to the image forming apparatus 30 (S237).

When determination is made in S231 that there is no target job, the printing management device 25a transmits notification (hereinafter, referred to as "target job absence notification") indicating that there is no target job, to the image forming apparatus 30 (S238).

When the processing of S237 or S238 ends, the printing management device 25a ends the operation shown in FIG. 10.

As shown in FIG. 8, in a case where the job information request transmitted from the image forming apparatus 30 in S203 is received, when there is the target job (in S231 (see FIG. 10), YES), the printing management device 25a of the printing management apparatus 20 transmits the job list to the image forming apparatus 30 (S237).

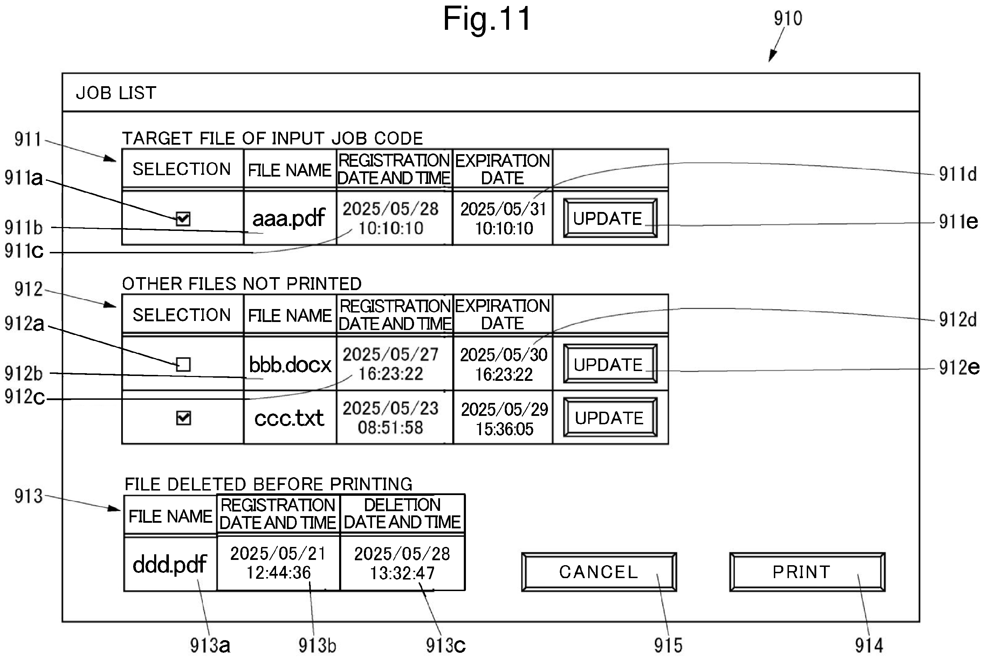

When the job list transmitted from the printing management apparatus 20 in S237 is received, the printing execution device 38a of the image forming apparatus 30 displays a screen (hereinafter, referred to as a "job list screen") 910 (see FIG. 11) based on the received job list on the display device 32 (S204).

FIG. 11 is a diagram showing an example of the job list screen 910 that is displayed in the operation shown in FIG. 10.

As shown in FIG. 11, the job list screen 910 includes a target job region 911 that shows information on a target job, a related job region 912 that shows information on a related job, a related deleted job region 913 that shows information on a related deleted job, a print button 914 as an object for instructing execution of a print job selected in at least one of the target job region 911 and the related job region 912, and a cancel button 915 as an object for instructing stop of execution of a print job.

The target job region 911 includes a check box 911a as an object for selecting a target job, a file name region 911b that shows a file name of a target job, a registration date and time region 911c that shows a registration date and time of a target job, an expiration date region 911d that shows a code expiration date of a target job, and an update button 911e as an object for updating a code expiration date of a target job.

The related job region 912 includes a check box 912a as an object for selecting a related job, a file name region 912b that shows a file name of a related job, a registration date and time region 912c that shows a registration date and time of a related job, an expiration date region 912d that shows a code expiration date of a related job, and an update button 912e as an object for updating a code expiration date of a related job for each related job.

The related deleted job region 913 includes a file name region 913a that shows a file name of a related deleted job, a registration date and time region 913b that shows a registration date and time of a related deleted job, and a deletion date and time region 913c that shows a job deletion date and time of a related deleted job for each related deleted job.

As shown in FIG. 8, after the processing of S204 ends, when the print button 914 is pressed, the printing execution device 38a of the image forming apparatus 30 ends the display of the job list screen 910 on the display device 32 (S205).

When the processing of S205 ends, the printing execution device 38a transmits a request (hereinafter, referred to as a "file request") of a file of a print job selected by the check box in at least one of the target job region 911 and the related job region 912 at a time when the print button 914 is pressed, to the printing management apparatus 20 (S206). The printing execution device 38a includes, in the file request, a job ID of the print job selected by the check box in at least one of the target job region 911 and the related job region 912 at a time when the print button 914 is pressed.

When the file request transmitted from the image forming apparatus 30 in S206 is received, the printing management device 25a of the printing management apparatus 20 transmits a file specified by the job ID included in the file request among files stored in the storage device 24 to the image forming apparatus 30 (S207).

When the processing of S207 ends, the printing management device 25a deletes a record including the job ID included in the file request transmitted from the image forming apparatus 30 in the S206 from the job management information 24d (S208).

When the processing of S208 ends, the printing management device 25a deletes the file transmitted to the image forming apparatus 30 in S207 from the storage device 24 (S209).

When the file transmitted from the printing management apparatus 20 in S207 is received, the printing execution device 38a of the image forming apparatus 30 executes printing based on the received file with the printer 33 (S210). That is, the printing execution device 38a executes a print job specified by the job ID included in the file request transmitted from the printing management apparatus 20 in S206.

After the processing of S204 ends, when the cancel button 915 is pressed, the printing execution device 38a of the image forming apparatus 30 ends the display of the job list screen 910 on the display device 32 (S211).

In a case where the job information request transmitted from the image forming apparatus 30 in S203 is received, when there is no target job (in S231 (see FIG. 10), NO), the printing management device 25a of the printing management apparatus 20 transmits the target job absence notification to the image forming apparatus 30 (S238).

When the target job absence notification transmitted from the printing management apparatus 20 in S238 is received, the printing execution device 38a of the image forming apparatus 30 displays, on the display device 32, the effect that there is no target job (S212).

Next, an operation of the printing management apparatus 20 in the case of executing processing regarding a code expiration date will be described.

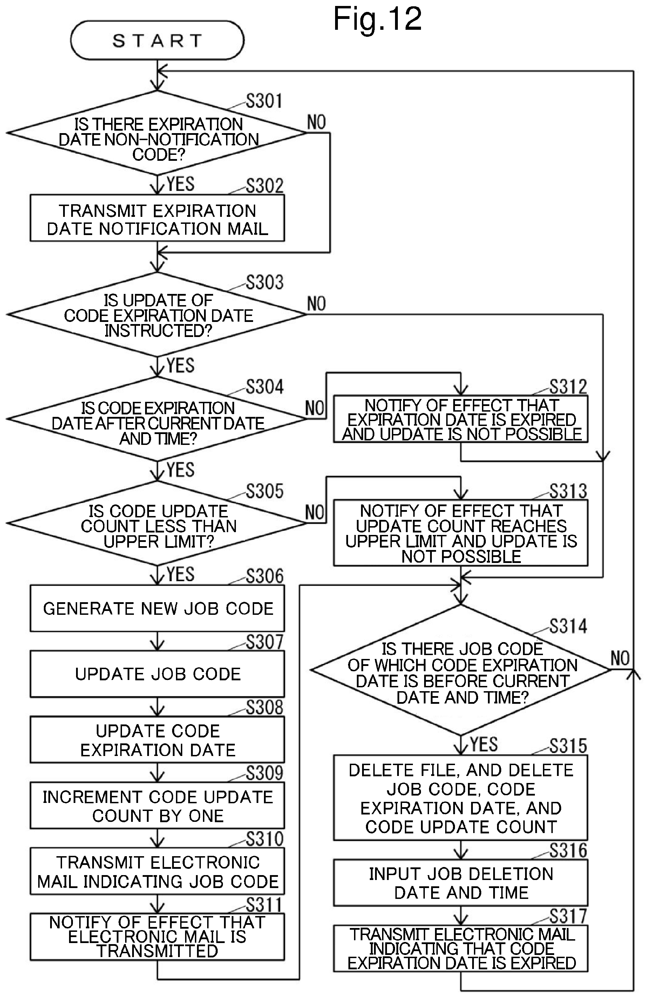

FIG. 12 is a flowchart of an operation of the printing management apparatus 20 in the case of executing processing regarding a code expiration date.

As shown in FIG. 12, the printing management device 25a of the printing management apparatus 20 determines whether there is a job code (hereinafter, referred to as an "expiration date non-notification code") of which the associated code expiration date in the job management information 24d is before a date and time obtained by adding a period shown in the expiration date notification time information 24g to a current date and time and after the current date and time, and which does not transmit an expiration date notification mail, among job codes included in the job management information 24d (S301).

When determination is made in S301 that there is the expiration date non-notification code, the printing management device 25a transmits an expiration date notification mail regarding the expiration date non-notification code determined in S301 to be present, to a transmission source address in the job management information 24d associated with the expiration date non-notification code (S302). The printing management device 25a includes a link to a URL of a web page (hereinafter, referred to as an "expiration date update page") for instructing the printing management apparatus 20 to update the code expiration date in the expiration date notification mail. In a case where the expiration date notification mail is received by the electronic mail client of the user terminal, when the link to the URL of the expiration date update page is included in the expiration date notification mail, the user can instruct the user terminal to access the expiration date update page by clicking or the like the link to the URL of the expiration date update page included in the expiration date notification mail via the operation device of the user terminal.

Hereinafter, as the operation of the system 10 in a case where an access to the expiration date update page is instructed to a user terminal, an operation of the system 10 in a case where an access to the expiration date update page is instructed to the user terminal 40 will be described as an example.

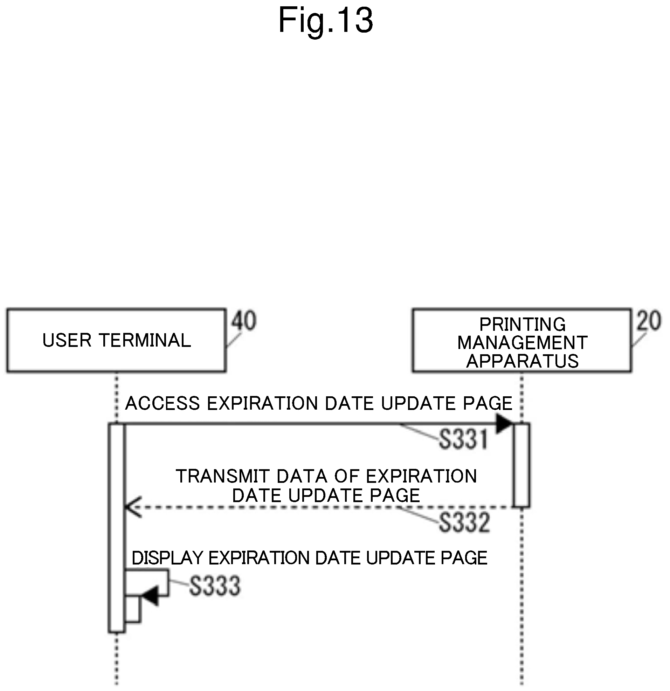

FIG. 13 is a sequence diagram of an operation of the system 10 in a case where an access to the expiration date update page is instructed to the user terminal 40.

As shown in FIG. 13, the web browser 45b of the user terminal 40 accesses the expiration date update page to which an access is instructed (S331).

When the access in S331 is received, the printing management device 25a of the printing management apparatus 20 transmits data of the expiration date update page to which the access is performed in S331, to the web browser 45b of the user terminal 40 (S332). The printing management device 25a includes, in the expiration date update page, an update button as an object for updating the code expiration date in the job management information 24d associated with a job code for the expiration date update page.

When data transmitted from the printing management apparatus 20 in S332 is received, the web browser 45b of the user terminal 40 displays the expiration date update page on the display device 42 on the basis of the received data (S333).

As shown in FIG. 12, when determination is made in S301 that there is no expiration date non-notification code or when the processing of S302 ends, the printing management device 25a determines whether the update of the code expiration date is instructed (S303). In a case where the update button is pressed on the job list screen or the expiration date update page, the printing management device 25a determines that the update of the code expiration date is instructed.

When determination is made in S303 that the update of the code expiration date is instructed, the printing management device 25a determines whether the code expiration date in the job management information 24d associated with the job code of which the update of the code expiration date is instructed is after the current date and time (S304).

When determination is made in S304 that the code expiration date in the job management information 24d associated with the job code of which the update of the code expiration date is instructed is after the current date and time, the printing management device 25a determines whether a code update count in the job management information 24d associated with the job code of which the update of the code expiration date is instructed is less than an upper limit shown in update count upper limit information 24h (S305).

When determination is made in S305 that the code update count in the job management information 24d associated with the job code of which the update of the code expiration date is instructed is less than the upper limit shown in the update count upper limit information 24h, the printing management device 25a generates a new job code for the job ID in the job management information 24d associated with the job code of which the update of the code expiration date is instructed (S306).

When the processing of S306 ends, the printing management device 25a updates the job code of which the update of the code expiration date is instructed, to the job code generated in S306 in the job management information 24d (S307).

When the processing of S307 ends, the printing management device 25a updates the code expiration date in the job management information 24d associated with the job code updated in S307 to a date and time obtained by adding a validity period shown in the code validity period information 24e to the current date and time, in the job management information 24d (S308).

When the processing of S308 ends, the printing management device 25a increments the code update count in the job management information 24d associated with the job code updated in S307 by one (S309).

When the processing of S309 ends, the printing management device 25a transmits an electronic mail showing the job code generated in S306 to the transmission source address in the job management information 24d associated with the job code updated in S307 (S310).

When the processing of S310 ends, the printing management device 25a notifies of the effect that the electronic mail showing the job code is transmitted (S311). In a case where an instruction to update a code expiration date is executed by an update button on a job list screen, the printing management device 25a gives an instruction to an image forming apparatus displaying the job list screen such that the notification in S311 is displayed on the job list screen. In a case where an instruction to update a code expiration date is executed by an update button on an expiration date update page, the printing management device 25a updates the expiration date update page such that the notification in S311 is displayed on the expiration date update page.

When determination is made in S304 that the code expiration date in the job management information 24d associated with the job code of which the update of the code expiration date is instructed is not after the current date and time, the printing management device 25a notifies of the effect that the update of the code expiration date is not possible because the expiration date is expired (S312). In a case where an instruction to update a code expiration date is executed by an update button on a job list screen, the printing management device 25a gives an instruction to an image forming apparatus displaying the job list screen such that the notification in S312 is displayed on the job list screen. In a case where an instruction to update a code expiration date is executed by an update button on an expiration date update page, the printing management device 25a updates the expiration date update page such that the notification in S312 is displayed on the expiration date update page.

When determination is made in S305 that the code update count in the job management information 24d associated with the job code of which the update of the code expiration date is instructed is not less than the upper limit shown in the update count upper limit information 24h, the printing management device 25a notifies of the effect that the update of the code expiration date is not possible because the update count has reached the upper limit (S313). In a case where an instruction to update a code expiration date is executed by an update button on a job list screen, the printing management device 25a gives an instruction to an image forming apparatus displaying the job list screen such that the notification in S313 is displayed on the job list screen. In a case where an instruction to update a code expiration date is executed by an update button on an expiration date update page, the printing management device 25a updates the expiration date update page such that the notification in S313 is displayed on the expiration date update page.

When determination is made in S303 that the update of the code expiration date is not instructed or when the processing of S311, S312, or S313 ends, the printing management device 25a determines whether there is a job code of which a code expiration date is before a current date and time, in the job management information 24d (S314).

When determination is made in S314 that there is the job code of which the code expiration date is before the current date and time, in the job management information 24d, the printing management device 25a deletes a file specified by a file name in the job management information 24d associated with the job code of which the code expiration date is before the current date and time, from the storage device 24, and deletes the job code and the code expiration date and the code update count in the job management information 24d associated with the job code from the job management information 24d (S315).

When the processing of S315 ends, the printing management device 25a input the current date and time as a job deletion date and time in a record in which the job code deleted from the job management information 24d in S315 is included (S316).

When the processing of S316 ends, the printing management device 25a transmits an electronic mail indicating that the code expiration date is expired, to the transmission source address in the record in which the job code deleted from the job management information 24d in S315 is included (S317). The printing management device 25a may include the job ID, the file name, the registration date and time, and the job deletion date and time in the record in which the job code deleted from the job management information 24d in S315 is included, in the electronic mail to be transmitted in S317.

When determination is made in S314 that there is no job code of which the code expiration date is before the current date and time, in the job management information 24d or when the processing of S317 ends, the printing management device 25a executes the processing of S301.

Next, an operation of the printing management apparatus 20 in the case of deleting a record from the job management information 24d will be described.

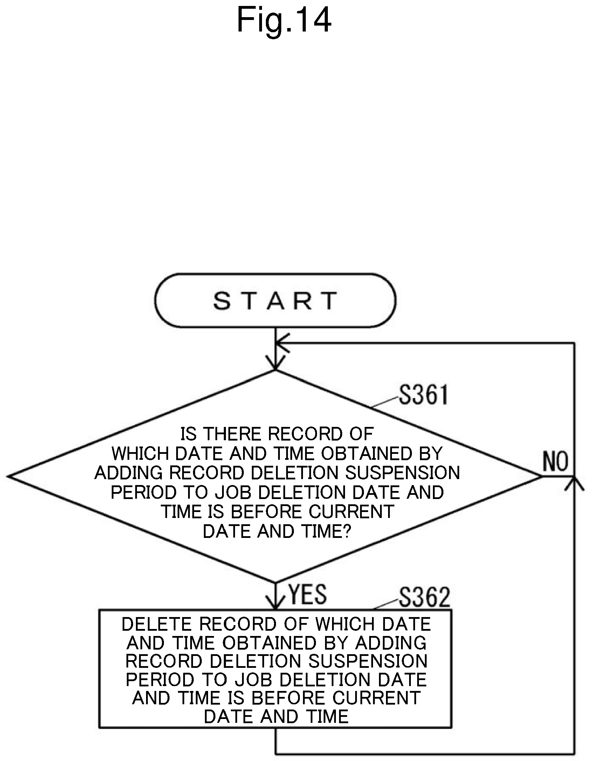

FIG. 14 is a flowchart of an operation of the printing management apparatus 20 in the case of deleting a record from the job management information 24d.

The printing management device 25a of the printing management apparatus 20 determines whether there is a record of which a date and time obtained by adding a record deletion suspension period shown in deletion suspension period information 24f to a job deletion date and time is before a current date and time, in the job management information 24d until determination is made that there is a record of which the date and time obtained by adding the record deletion suspension period shown in the record deletion suspension period information 24f to the job deletion date and time is before the current date and time, in the job management information 24d (S361).

When determination is made in S361 that there is a record of which the date and time obtained by adding the record deletion suspension period shown in record deletion suspension period information 24f to the job deletion date and time is before the current date and time, in the job management information 24d, the printing management device 25a deletes the record of which the date and time obtained by adding the record deletion suspension period shown in record deletion suspension period information 24f to the job deletion date and time is before the current date and time, from the job management information 24d (S362), and executes the processing of S361.

In S315, the printing management device 25a may one or both the job code and the code update count from the job management information 24d without deleting the code expiration date in the job management information 24d associated with the job code from the job management information 24d. In this case, in S233, a print job in the job management information 24d with which a code expiration date after the current date and time is associated may be set as a print job corresponding to a job code of which a code expiration date is not expired. Further, in S235, a print job in the job management information 24d with which the code expiration date before the current date and time is associated may be set as a print job corresponding to a job code of which a code expiration date is expired.

As described above, in a case where a job code is received from an image forming apparatus, the printing management apparatus 20 transmits information on a target job corresponding to the received job code and information on a related job as a print job different from the target job, with which a transmission source associated with the target job is associated and which corresponds to a job code with an expiration date not expired, to the image forming apparatus (S232, S234, and S237). For this reason, it is possible to reduce labor and time of the user who inputs a job code to an image forming apparatus.

As shown in FIG. 3, in the printing management apparatus 20, because there is a code expiration date for each job code, it is possible to improve security performance.

In a case where data is received (in S132, YES), the printing management apparatus 20 notifies a transmission source of data of a job code for execution of a print job based on data and a code expiration date as an expiration date of the job code (S142). For this reason, it is possible to allow the user to recognize not only the job code but also the code expiration date.

In a case where a job code is received from an image forming apparatus, the printing management apparatus 20 transmits, to the image forming apparatus, information on a target job corresponding to the received job code, information on a related job, as a print job different from the target job, with which a transmission source associated with the target job is associated and which corresponds to a job code with an expiration date not expired, and information on a related deleted job, as a print job different from the target job, with which the transmission source associated with the target job is associated and which corresponds to a job code with an expiration date expired (S232, S234, S236, and S237). For this reason, it is possible to allow the user to recognize information on the related deleted job. For example, it is possible to allow the user to transmit data for newly generating a print job associated with a file similar to a file of the related deleted job, from a user terminal to the printing management apparatus 20 by an electronic mail by recognizing information on the related deleted job.

In a case where an expiration date of a job code is expired (in S314, YES), the printing management apparatus 20 deletes the job code of which the expiration date is expired (S315). For this reason, it is possible to improve security performance.

In a case where an expiration date of a job code is expired (in S314, YES), the printing management apparatus 20 deletes a file of a print job corresponding to the job code of which the expiration date is expired (S315). For this reason, it is possible to improve security performance.

In a case where update of an expiration date is instructed (in S303, YES), the printing management apparatus 20 updates the expiration date of which the update is instructed (S308). For this reason, it is possible to improve convenience.

In a case where update of an expiration date is instructed (in S303, YES), when the expiration date of which the update is instructed is expired (in S304, NO), the printing management apparatus 20 does not update the expiration date. For this reason, it is possible to improve security performance.

In a case where update of an expiration date is instructed (in S303, YES), when the expiration date of which the update is instructed is expired (in S304, NO), the printing management apparatus 20 notifies of the effect that the update of the expiration date is not possible because the expiration date is expired (S312). For this reason, it is possible to improve convenience.

In a case where update of an expiration date is instructed (in S303, YES), when an update count of the expiration date of which the update is instructed reaches an upper limit (in S305, NO), the printing management apparatus 20 does not update the expiration date. For this reason, it is possible to improve security performance.

In a case where update of an expiration date is instructed (in S303, YES), when an update count of the expiration date of which the update is instructed reaches an upper limit (in S305, NO), the printing management apparatus 20 notifies of the effect that the update of the expiration date is not possible because the update count of the expiration date has reached the upper limit (S313). For this reason, it is possible to improve convenience.

In the case of updating an expiration date (S308), the printing management apparatus 20 also update a job code for the expiration date to be updated (S307). For this reason, it is possible to improve security performance.

In a case where an expiration date of a job code is within a specific period after a current date and time (in S301, YES), the printing management apparatus 20 notifies of the expiration date of the job code (S302). For this reason, it is possible to allow the user to recognize that the expiration date of the job code is approaching, and to improve convenience.

In the case of notifying of an expiration date of a job code, the printing management apparatus 20 also notifies of a link for instructing the printing management apparatus to update the expiration date of the job code (S302). For this reason, it is possible to improve convenience. In the case of including a code expiration date in an electronic mail to be transmitted in S142, the printing management apparatus 20 may include the link for instructing the printing management apparatus to update the expiration date of the job code in the electronic mail to be transmitted in S142.

The printing management apparatus 20 includes an expiration date of a job code in information on a target job to be transmitted to an image forming apparatus (S232). For this reason, it is possible to allow the user to recognize the expiration date of the job code, and to improve convenience. The printing management apparatus 20 includes an expiration date of a job code in information on a related job to be transmitted to an image forming apparatus (S234). For this reason, it is possible to allow the user to recognize the expiration date of the job code, and to improve convenience.

In a case where an expiration date of a job code of a print job is included in information on a target job and information on a related job received from the printing management apparatus 20, the image forming apparatus 30 displays the expiration date of the job code of the print job in the expiration date region 911d and the expiration date region 912d on the job list screen 910 that shows information on the target job and information on the related job (S204). For this reason, it is possible to allow the user to recognize the expiration date of the job code, and to improve convenience.

The image forming apparatus 30 displays the update button 911e and the update button 912e for instructing the printing management apparatus 20 to update an expiration date of a job code on the job list screen 910 that shows information on the target job and information on the related job (S204). For this reason, it is possible to improve convenience.

The image forming apparatus 30 displays information on the target job and information on the related job in the target job region 911 and the related job region 912 on the job list screen 910 that shows information on the target job and information on the related job, in a distinguished manner (S204). For this reason, it is possible to improve convenience.

The image forming apparatus 30 displays information on the target job, information on the related job, and information on the related deleted job in the target job region 911, the related job region 912, and the related deleted job region 913 on the job list screen 910 that shows information on the target job and information on the related job, in a distinguished manner (S204). For this reason, it is possible to improve convenience.

In the present embodiment, the printing management apparatus 20 determines whether a transmission source of data is identical, on the basis of a transmission source address. In contrast, the printing management apparatus 20 may determine whether the transmission source of data is identical, on the basis of information other than the transmission source address included in an electronic mail that transmits data, as long as the transmission source can be identified by information. For example, the printing management apparatus 20 may determine whether the transmission source of data is identical, on the basis of a display name of the transmission source included in the electronic mail that transmits data.

In a general printing management apparatus not based on the present embodiment, because the job code is valid for a long period, there is a problem in terms of security. In contrast, according to the above-described embodiment, it is possible to improve security performance.

## Claims

1. A printing management apparatus (20) comprising:
a printing management device (25a) configured to manage a print job,
wherein the printing management device (25a) is configured to
manage, in a case where data is received, the print job based on the data in association with a job code for execution of the print job, an expiration date of the job code, and a transmission source of the data,
transmit, in a case where the job code is received from the image forming apparatus (30), information on a target job as the print job corresponding to the received job code and information on a related job as the print job different from that target job and as the print job with which the transmission source associated with the target job is associated and which corresponds to the job code with the expiration date not expired, to the image forming apparatus (30), and
transmit, in a case where a file (24c) of the print job is requested from the image forming apparatus (30), the requested file (24c) to the image forming apparatus (30).

2. The printing management apparatus (20) according to claim 1,
wherein the printing management device (25a) is configured to notify, in a case where the data is received, the transmission source of the data of the job code for the execution of the print job based on the data and the expiration date of the job code.

3. The printing management apparatus (20) according to claim 1,
wherein the printing management device (25a) is configured to transmit, in a case where the job code is received from the image forming apparatus (30), the information on the target job, the information on the related job, and information on a related deleted job as the print job different from the target job and as the print job with which the transmission source associated with the target job is associated and which corresponds to the job code with the expiration date expired, to the image forming apparatus (30).

4. The printing management apparatus (20) according to claim 1,
wherein the printing management device (25a) is configured to delete, in a case where the expiration date of the job code is expired, the job code with the expiration date expired.

5. The printing management apparatus (20) according to claim 1,
wherein the printing management device (25a) is configured to delete, in a case where the expiration date of the job code is expired, the file (24c) of the print job corresponding to the job code with the expiration date expired.

6. The printing management apparatus (20) according to claim 1,
wherein the printing management device (25a) is configured to update, in a case where update of the expiration date is instructed, the expiration date of which the update is instructed.

7. The printing management apparatus (20) according to claim 6,
wherein the printing management device (25a) is configured to not update, in a case where the update of the expiration date is instructed, the expiration date when the expiration date of which the update is instructed is expired.

8. The printing management apparatus (20) according to claim 7,
wherein the printing management device (25a) is configured to notify, in a case where the update of the expiration date is instructed, that the update of the expiration date is not possible because the expiration date is expired when the expiration date of which the update is instructed is expired.

9. The printing management apparatus (20) according to claim 6,
wherein the printing management device (25a) is configured to not update, in a case where the update of the expiration date is instructed, the expiration date when an update count of the expiration date of which the update is instructed reaches an upper limit.

10. The printing management apparatus (20) according to claim 9,
wherein the printing management device (25a) is configured to notify, in a case where the update of the expiration date is instructed, that the update of the expiration date is not possible because the update count of the expiration date has reached the upper limit when the update count of the expiration date of which the update is instructed reaches the upper limit.

11. The printing management apparatus (20) according to claim 6,
wherein the printing management device (25a) is configured to update, in a case of updating the expiration date, also the job code for the expiration date to be updated.

12. The printing management apparatus (20) according to claim 1,
wherein the printing management device (25a) is configured to notify, in a case where the expiration date is present within a specific period after a current date and time, of the expiration date.

13. The printing management apparatus (20) according to claim 1,
wherein the printing management device (25a) is configured to notify, in a case of notifying the expiration date, also a link for instructing the printing management apparatus (20) to update the expiration date.

14. The printing management apparatus (20) according to claim 1,
wherein the printing management device (25a) is configured to include the expiration date of the job code in at least one of the information on the target job and the information on the related job that are transmitted to the image forming apparatus (30).

15. A printing management program (24a) causing a computer to operate as a printing management device (25a) configured to manage a print job,
wherein the printing management program (24a) further operates the computer such that
the printing management device (25a) manages, in a case where data is received, the print job based on the data in association with a job code for execution of the print job, an expiration date of the job code, and a transmission source of the data,
transmits, in a case where the job code is received from the image forming apparatus (30), information on a target job as the print job corresponding to the received job code and information on a related job as the print job different from that target job and as the print job with which the transmission source associated with the target job is associated and which corresponds to the job code with the expiration date not expired, to the image forming apparatus (30), and
transmits, in a case where a file (24c) of the print job is requested from the image forming apparatus (30), the requested file (24c) to the image forming apparatus (30).

16. An image forming apparatus (30) comprising:
a printing execution device (38a) configured to execute a print job based on received data that is managed by a printing management apparatus (20) configured to manage the print job in association with a job code for execution of the print job, an expiration date of the job code, and a transmission source of the data,
wherein the printing execution device (38a) is configured to
display, in a case where the job code is transmitted to the printing management apparatus (20), when information on a target job as the print job corresponding to the transmitted job code and information on a related job as the print job different from the target job and as the print job with which the transmission source associated with the target job is associated and which corresponds to the job code with the expiration date not expired are received from the printing management apparatus (20), a screen (910) showing the received information on the target job and information on the related job,
display, in a case where the expiration date of the job code of the print job is included in at least one of the information on the target job and the information on the related job received from the printing management apparatus (20), the expiration date on the screen (910), and
execute, in a case where a file (24c) of the print job is requested to the printing management apparatus (20), when the requested file (24c) is received from the printing management apparatus (20), printing based on the received file (24c).
